# EUROPEAN PATENT SPECIFICATION

(11) **EP 3 891 954 B1**
(45) Date of publication and mention of the grant of the patent: **30.11.2022**
(21) Application number: 19823882.6
(22) Date of filing: 05.12.2019
(51) Int. Cl.: H04L 9/40

(54) **METHOD AND SYSTEM FOR DEVICE IDENTIFICATION AND MONITORING**
VERFAHREN UND SYSTEM ZUR GERÄTEIDENTIFIKATION UND -ÜBERWACHUNG
PROCÉDÉ ET SYSTÈME D'IDENTIFICATION ET DE SURVEILLANCE DE DISPOSITIFS

(30) Priority: 10.05.2019 EP 19173850
(43) Date of publication of application: 13.10.2021
(73) Proprietor: NEC Corporation, Tokyo 108-8001 (JP)
(72) Inventor: KARAME, Ghassan, 69115 Heidelberg (DE); SORIENTE, Claudio, 28692 Villafranca del Castillo (ES); LI, Wenting, 69115 Heidelberg (DE)
(74) Representative: Ullrich & Naumann PartG mbB
(86) International application number: PCT/EP2019/083899
(87) International publication number: WO 2020/228976

(56) References cited:
- CN-A- 109 104 311
- US-A1- 2018 183 587
- US-B1- 10 162 968
- SINGLA ANKUSH ET AL: "Blockchain-Based PKI Solutions for IoT", 2018 IEEE 4TH INTERNATIONAL CONFERENCE ON COLLABORATION AND INTERNET COMPUTING (CIC), IEEE, 18 October 2018 (2018-10-18), pages 9-15, XP033450017, DOI: 10.1109/CIC.2018.00-45 [retrieved on 2018-11-15]

## Description

The present invention relates to a method and a system for identification and monitoring of devices of a network.

Large-scale dynamic networks such as 4G (LTE/LTE-Advanced) and 5G networks connect billions of heterogeneous devices produced by different manufacturers and managed by a range of network operators. As such, identifying a device in order to determine if it is trustworthy is a complicated task. First, most devices do not have means of authentication. Second, devices may have different software or hardware configurations, and may have been handled by multiple parties - what hampers the task of checking if a device is in a trustworthy state.

One viable option is to collect information on the device lifecycle. However, lifecycle information of a network device, if available, is currently fragmented across databases of manufacturers, supply-chain parties, network companies, cloud service providers and end-users. Most of the time such databases are private. In addition, even when public, there is no means to verify that the information available has not been maliciously manipulated. It is, therefore, difficult to gather information on a device and tell if it is trustworthy.

US 2018/0183587 and CN 109 104 311 relate to a blockchain-assisted public key infrastructure (PKI) for Internet of Things (loT) applications.

US 10,162,968 discloses a method for securely updating registered devices using a development system and a release management system operated by an update provider and an update publisher.

It is therefore an object of the present invention to improve and further develop a method and a system for identification and monitoring of devices of a network in a way that facilitates a determination of whether a device is trustworthy or not.

In accordance with the invention, the aforementioned object is accomplished by a method for identification and monitoring of devices of a network according to claim

Furthermore, the above mentioned object is accomplished by a system for identification and monitoring of devices of a network according to claim 6.

The method and the system of the invention provide a distributed approach to identify and monitor devices of a large-scale dynamic network. In such an environment, different operators deploy heterogeneous devices from a range of manufacturers. As such, information on a given device are fragmented across administrative domains and generally, it is be difficult to tell a genuine device from a counterfeited one.

To address this issue and to enable simplified device identification in a global dynamic network, methods and systems according to embodiments of the invention combine a public key infrastructure (PKI) and permissioned distributed ledger technology (DLT) and, in some embodiments, trusted execution environments (TEE). A public key infrastructure provides a) an identity to each device and b) means for a device to prove its identity. In this context, TEEs can ensure that the secret key of a device is not leaked and may allow for verifying (e.g. via remote attestation) the hardware and software configuration of a device.

The distributed ledger provides decentralized storage among participated nodes.

Specifically, the ledger may be used to integrate device identity management, device history management, and software update management. Each stakeholder, i.e. each of the participating entities, holds at least one node in a distributed ledger network. Stakeholders can use their nodes within the distributed ledger network to issue and retrieve records to/from the ledger of the distributed ledger network.

According to embodiments, the ledger may be permissioned so that only authorized peers can access/update the ledger. In any case, the ledger provides a robust system because the distributed copies of the data of the ledger prevent single point of failure or attack. Meanwhile, the consensus protocol of the ledger ensures the consistency of the data across all participating nodes by information broadcasting, transaction validation and block mining. As such, the present invention provides a distributed database where devices history and status can be queried in order to decide whether a device is trustworthy. At the current status, such information is fragmented across multiple databases that face issues in terms of scalability and integrity.

According to embodiments, device manufacturers or hardware vendors may act as PKI certification authorities and pre-load a unique certified public key in each device at manufacturing time. PKI information may be provided or casted to the distributed ledger to obtain a tamper-proof log of existing network devices and their public keys. Further, any time a network device migrates from one stakeholder to another (e.g., when it is offloaded from the manufacturer to a supply-chain member, e.g. a shipping company, or when it is delivered from a shipping company to the recipient, e.g. a network operator) a record is added to the distributed ledger. Manufacturers may also distribute firmware/software updates for their devices and signal the availability of an update on the distributed ledger.

According to some examples, a device owner, e.g., a network operator, may run an attestation service that is configured to attests the status of its own devices, for instance periodically or event-based. The type of attestation may depend on the device being attested. If the device has a TEE, the attestation may verify the software running on the device and that the device's public key is certified. If the device has no TEE but presents a public key, the attestation may verify that the device holds the corresponding secret key and that the device manufacturer certifies the public key. If the device has neither a TEE nor a public key, the attestation service may try to identify/fingerprint the device. Independent of the attestation mechanism actually applied, it may be provided that each time a device is attested, the network operator adds a record to the distributed ledger with the result of the attestation.

As such, the distributed ledger can be queried, by authorized parties, on a given device to learn its public key and its history on a) shipping from manufacturing to deployment, b) firmware/software updates, and c) attestation. The acquired information may be fed to a risk assessment service that is configured to decide, based on the device information fetched or learned from the distributed ledger and by applying predefined or configurable risk assessment rules, whether the device is trustworthy or not. In case the risk assessment is successfully passed, the device may be qualified as trustworthy or genuine, and the network operator may put the device into operation and may offer the device connectivity to the network. Otherwise, the network operator may consider the device as being compromised or counterfeit and may reject the device.

There are several ways how to design and further develop the teaching of the present invention in an advantageous way. To this end it is to be referred to the dependent patent claims on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing
- Fig. 1: is a schematic overview of a system in accordance with an embodiment of the present invention showing the architecture of a distributed ledger and network infrastructures,
- Fig. 2: is a schematic view illustrating a process of device verification by a network operator before device deployment,
- Fig. 3: is a schematic view showing a delegated device attestation service in accordance with an embodiment of the present invention, ,
- Fig. 4: is a schematic view showing remote device attestation with a TEE of the device , and
- Fig. 5: is a schematic view showing the execution of a software attestation based on a pseudorandom memory traversal.

Generally, the present invention relates to methods and systems for identification and monitoring of devices in a network, in particular a large-scale dynamic network, such as a 4G/5G communication network, wherein the devices are provided, operated and/or controlled by different participating entities. The embodiments described hereinafter in detail assume hardware vendors, supply-chain members and network operators to constitute the participating entities of the network. However, as will be appreciated by those skilled in the art, the invention is not restricted to these particular participating entities, i.e. further entities with different functionalities, duties, areas of activity and/or responsibilities may likewise participate in the network by providing, operating and/or controlling devices in the network.

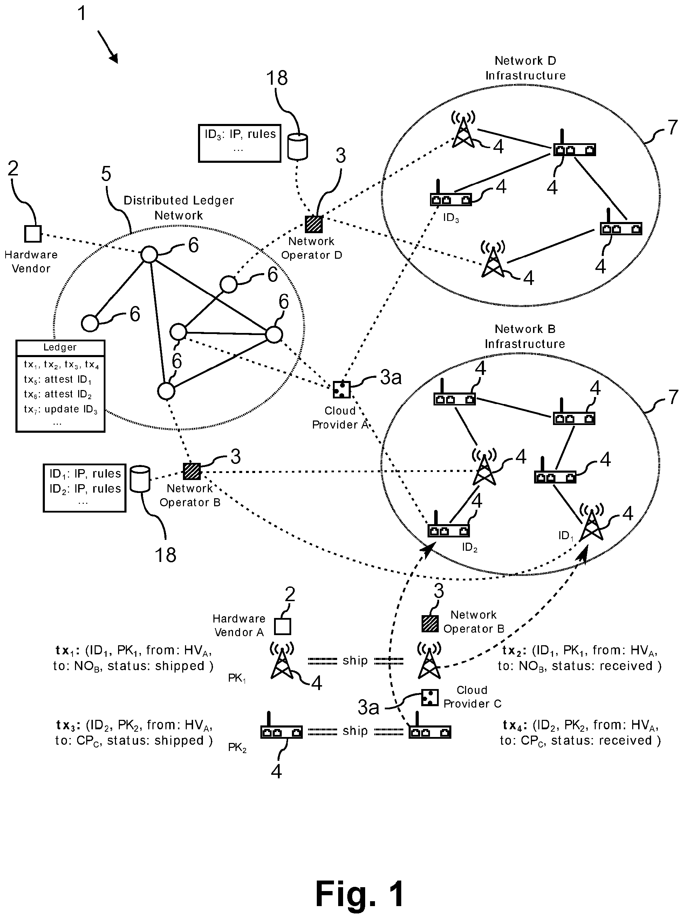

Fig. 1 illustrates an embodiment of the present invention and depicts a mobile communication network 1 in which the above-mentioned stakeholders - hardware vendors 2, supply-chain members (not explicitly shown in Fig. 1) and network operators 3 - are involved as participating entities. Generally, hardware vendors 2 are entities that are producing and commercializing network devices 4, including network routers, switches, servers, smartphones, etc. Supply-chain members are entities that belong to the distribution network used to ship and deliver devices 4. Network operators 3 (including cloud network service providers 3a) are entities that acquire devices 4 from hardware vendors 2; they are responsible for deploying and maintaining such acquired devices 4. Network operators 3 may also acquire devices 4 from other network operators 3.

According to an embodiment, a distributed ledger network 5 is established where each of the above entities is a member of the ledger network 5. To be a member of the distributed ledger network 5 means that each participating entity maintains one or multiple nodes 6 in the distributed ledger network 5. As such, i.e. via these nodes 6, the participating entities are able to issue and retrieve records to/from a ledger or blockchain of the distributed ledger network 5. Moreover, any of the above entities may also act as a "miner", thereby participating in the consensus algorithm of the distributed ledger. Hereinafter, the terms distributed ledger and blockchain will be used synonymously.

According to an embodiment, the distributed ledger, which may be implemented as a permissioned distributed ledger, features an identity service. The identity service may be used to provide certified public keys to each of the participating entities of the mobile communication network 1. As such, communication between any two participating entities is authenticated; also, records issued to the distributed ledger are authenticated.

According to an embodiment, the distributed ledger maintains the lifecycle information of all network devices 4 being involved in the mobile communication network 1, possibly within multiple different administrative domains 7. For instance, this enables network operators 3 to check the status of any device 4, both in shipment and in operation, as will be described in more detail below.

Fig. 1 illustrates the architecture of the distributed ledger network 5 together with the communication networks' infrastructures and the associated entities. In the illustrated embodiment, the participating entities or stakeholders include hardware vendor A, network operator B, cloud provider C and network operator D. As shown by the dotted lines, all stakeholders maintain one or multiple nodes 6 in the distributed ledger network 5.

The hardware vendors 2 maintain a Public Key Infrastructure (PKI) for the network devices 4, while the private keys of the network devices 4 may be protected in Trusted Computing Bases (TCBs), if the respective device 4 is equipped with a TEE, or in Read-Only Memories (ROMs), if the respective device 4 is not equipped with a TEE. The public keys of the devices 4 will be recorded in transactions that the participating entities issue to the ledger of the distributed ledger network 5. Whenever a status of a device 4 is updated or changed, a respective transaction indicating the updated or changed device status is issued to the distributed ledger network 5 so that the ledger always stores the latest device information. This device information may include information such as the device owner, maintainer, status (shipped/received/deployed/revoked), attestation result, firmware version, etc. According to embodiments of the invention, network operators 3 are configured to always check the status of a device 4 before granting access to the device 4 to connect to the network operator's 3 network/administrative domain 7. On the other hand, as indicated by the configuration databases 18, the configuration of the devices 4 in each network, such as routing policies, may be maintained independently by each network operator 3, as it is orthogonal to the lifecycle information of the devices 4.

According to embodiments, the distributed ledger may be used for identity management of all devices 4. In particular, the device status in the supply chain as well as in operation may be updated in the ledger and is thus available to all stakeholders. Furthermore, the distributed ledger may be used, e.g., for the management of the software running on all devices 4, as well as for the management of the history of ownership/lease/rental of every device 4. As will be appreciated by those skilled in the art, further use cases may be envisioned.

According to embodiments, it may be provided that each hardware vendor 2 sets up its own PKI (Public Key Infrastructure) embedding certified public keys in each of its devices 4 before they leave the factory. Public keys are used as identities for the devices 4. If the device 4 has a TEE (Trusted Execution Environment), the device's 4 private key may be saved in the secure storage of the TCB of the device's TEE. Otherwise, the private key may be hardcoded in the device's 4 firmware/OS (Operating System), specifically in a memory area that is hard to be modified such as ROM. While the private key is securely hidden within the device 4, the device's 4 public key may be made perceivable to the outside. For instance, according to an embodiment the private key may be visible, e.g. by printing it on the device's 4 package (e.g., in form of a QR-code). It should be noted that, by displaying the public key of a device 4 on its packaging, device attestation can be tied to the device's 4 shipping history.

According to an embodiment, hardware vendors 2 also handle revocation of its devices' 4 public keys. Revocation decisions may take into account information available on the distributed ledger or obtained through other sources.

Finally, hardware vendors 2 may handle firmware updates by publishing new firmwares. An update of a firmware on a device 4 may be carried out by the hardware vendor 2 over-the-air, or it may require manual intervention of the device owner (e.g., the network operators 3 or cloud providers 3a). In the latter case, the hardware vendor 2 may simply distribute or publish the updated firmware.

As illustrated in Fig. 1, a hardware vendor 2 may issue a record to the distributed ledger upon any of the following events:
1) A new device 4 has been produced: In this case, the transaction record may be implemented to hold information on the new device 4 (e.g., model, hardware features, serial number) including its public key
2) A device 4 has been shipped via a given supply-chain member: In this case, the transaction record may be implemented to hold the public key of the device 4 and the identity of the supply-chain member.
3) An existing device must be revoked: In this case, the record may be implemented to hold the public key of the device being revoked and additional information, such as the reason for revocation.
4) New firmware is available for a specific device model: In this case, the record may be implemented to include the device model, a signed digest of the firmware and a URL where to fetch the firmware.
5) The firmware of device X has been updated to version Y. In this case, the record includes the public key of the device and the digest of the firmware

It should be noted that the above list is non-exhaustive and that different events may be envisioned that trigger a hardware vendor 2 to issue a record to the ledger.

More specifically, when a device 4 is produced, the hardware vendor 2 generates a respective transaction messages, which may be configured as follows:

```
 Txcreate: (id, model_name, manufacturer,
serial_number, public_key, firmware_version, "produced")
```

The transaction message is published to the distributed ledger. It should be noted that transaction message contains a parameter "current status", which in the above example is set to "produced". The *id* of the device 4 should be unique. For instance, for easy look-up the *id* can be the cryptographic hash of the device's 4 public key *public_key.* The *firmware_version* includes information such as the version number, the digest and the URL to download the firmware.

Upon creation of the transaction message *Tx_{create}* and publishing it to the distributed ledger, the contents of the transaction message are then stored in the ledger. In this context, it is important to note that the information of id, model_name, manufacturer, serial_number, and public_key should be immutable in the ledger, unless a particular use case specifies differently. The other information can be updated via subsequent transaction messages.

For instance, when the firmware of a device is updated, the respective hardware vendor 2, in order to update the firmware information, may send a new transaction message to the distributed ledger as follows:

```
                       Txupgrade: (id, firmware_version', vendor)
```

Moreover, when the key of a device 4 is revoked, the respective hardware vendor 2, in order to update the status as "revoked", may send a new transaction message to the distributed ledger as follows:

```
                              Txrevoke: (id, "revoked")
```

According to embodiments, the above-mentioned transaction messages also carry along the authentication information of the respective hardware vendor 2. This authentication information can be verified by all nodes 6 of the distributed leger network 7 in order to accept the Tx_create, Tx_upgrade, and Tx_revoke messages. In this context, an access control approach may be implemented according to which a sender of a transaction message will be authenticated and authorized when the respective transaction message is validated. Moreover, upon acceptance of every transaction message, it may be timestamped by the distributed ledger.

Supply-chain members, which are not explicitly shown in the embodiment of Fig. 1, handle shipping of devices 4 between hardware vendors 2 and network operators 3. As such, a hardware vendor 2 and a network operator 3 are the first and last node of a supply-chain, respectively. Supply-chain members may advertise collected and delivered devices 4 via the distributed ledger.

Generally, records issued by supply-chain members to the distributed ledger reflect the shipment history of a device 4. According to embodiments, a supply-chain member issues a record to the distributed ledger upon the following events:
1) A device 4 has been delivered from a hardware vendor 2 or network operator 3: In this case, the record (exemplarily depicted as 'tx₁' and 'tx₃' in the lower part of Fig. 1) will include the public key of the device 4 and the identity of the hardware vendor 2 or network operator 3.
2) A device has been received by a network operator 3: In this case, the record (depicted as 'tx₂' and 'tx₄' in Fig. 1) will include the public key of the device 4 and the identity of the receiving network operator 3.

Like in the case of hardware vendors 2, other events different from the ones mentioned above may be envisioned that trigger a supply-chain member to issue a record to the ledger.

More specifically, when a device 4 is shipped through a supply-chain member, the status of the device 4 is updated to "shipped" with the recipient information (i.e., network operator 3) via the following transaction:

```
                         Txship: (id, "shipped", operator)
```

Upon reception of a new device 4 , a network operator 3 may first perform actions to obtain the public key (or ID) of the device 4. For instance, depending on the specific implementation, the network operator 3 may execute a scan (in case the public key is visibly is displayed or indicated, e.g. on a package of the device 4). According to an alternative embodiment, the network operator 3 may query the device information from the distributed ledger. If the device information from the ledger matches the description of the received package, the network operator 3 sends a transaction to the ledger to update the device status as "received". This transaction may have the following form:

```
                       Txreceive: (id, "received", operator).
```

Network operators 3 are responsible of handling devices 4 within their own network domains 7, as shown in Fig. 1 for network operator B and network operator D. Before deploying any device 4 to their network domains 7, it may be provided that a network operator 3 verifies (e.g., by means of attestation) that the private key embedded in the respective device 4 (i.e., in the device's OS, firmware, or TEE) matches the device's 4 public key that is made publicly accessible, for instance by being visibly displayed on an outside surface of the device 4 or on its package. If this verification fails, the network operator 3 does not allow the device 4 to join the network 1, 7. On the other hand, if the verification succeeds, the network operator34 may allow the device 4 to join the network 1, 7.

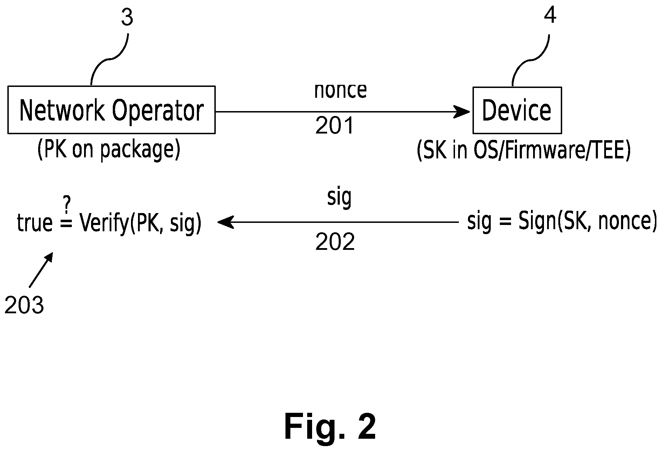

More specifically, according to an example illustrated in Fig. 2, verification of a device 4 by a network operator 3 before deployment of the device 4 may include the following steps: first, the network operator 3 obtains the device's 4 public keys 'PK' and sends a random nonce as a challenge to the device 4, as shown at 201. In response, as shown at 202, the device 4 returns a signature 'sig' over the challenge, i.e. the device's 4 private/secure key 'SK' and the nonce. Using the device's 4 public key 'PK', the signature is then verified by the network operator 3, as shown at step 203.

In any case, i.e. regardless of whether the verification failed or succeeded, the network operator 3 issues a new record to the distributed ledger providing information on the verification. This transaction record may be implemented as follows:

```
                Txverify: (id, nonceauth, sig, verification_result)
```

If the operator 3 deploys the device 4, then the status can be updated to "deployed" only if the blockchain checked that the verification_result is positive.

```
                            Txupdate: (id, "deployed")
```

Network operators 3 may also handle firmware updates that cannot be executed by hardware vendors 2 over-the-air. It may be provided that a network operator 3 only updates a specific device 4 within its domain 7 with a specific firmware version if the respective device 4 has been posted to the distributed ledger by the device manufacturer, i.e. the respective hardware vendor 2. The outcome of a firmware update procedure may once again be signaled by issuing a record to the distributed ledger. This allows members of the distributed ledger network 5 to be aware of the software/firmware version running on a given device 4. A transaction record that advertises the results of a device firmware update may be implemented as follows:

```
                  Txupgrade: (id, firmware_version', operator)
```

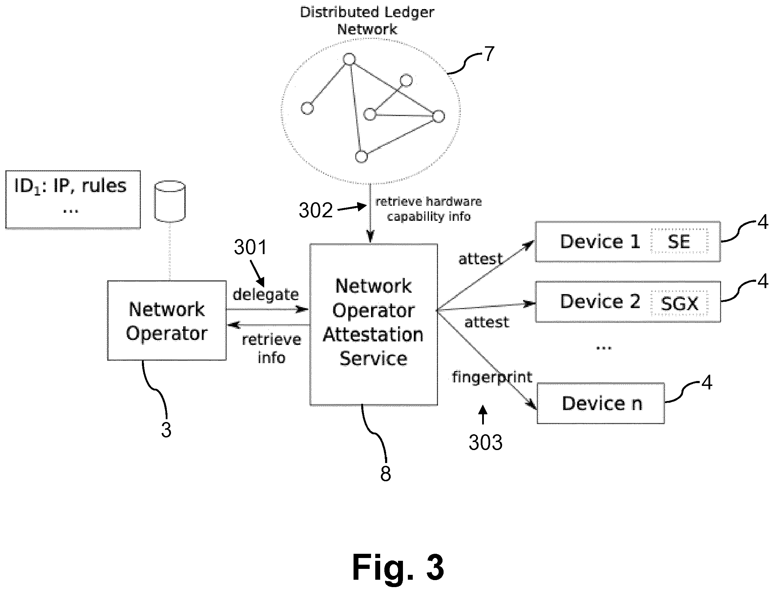

As shown in Fig. 3, a network operator 3 may run an attestation service 8 for attesting devices 4 belonging to its domain 7 in order to verify the integrity of the firmware and software on the devices 4. The attestation service 8 may be configured to perform device attestation either periodically at predefined or configured intervals or event-based.

As depicted in Fig. 3, the network operator 3 may delegate an attestation task to the attestation service 8 (as shown at 301). Upon delegation, the attestation service 8, by contacting the distributed ledger, may retrieve the necessary information of each device 4 to be attested (as shown at 302), in particular information on the device's 4 hardware capabilities. Based on the retrieved device information, the attestation service 8 attests or fingerprints the respective device 4 periodically (as shown at 303). The attestation service 8 may be configured to accommodate different types of TEE or smart cards. Results of each attestation are signaled by issuing a record to the distributed ledger.

Generally, the attestation service 8 may identify the device type together with the hardware security capabilities of the device 4 and, depending on the capability of the underlying hardware, the attestation service 8 may perform the following operations:
- If the device's 4 hardware supports Intel SGX (Software Guard Extensions), initiate SGX attestation
- If the device's 4 hardware supports Trustzone, initiate Trustzone attestation
- If the device's 4 hardware is RISC-V (for reference, see https://riscv.org/faq), initiate specific hardware attestation
- If the device's 4 hardware has a TPM (Trusted Platform Module) chip, initiate TPM attestation
- If there is a smart card or a SIM card, initiate smartcard-based attestation (for instance, in accordance with the attestation procedure described in US 2016/0132681 A1)
- If the device 4 does not have any secure hardware support, perform a software attestation based on pseudorandom memory traversal
- If the device's 4 hardware has Read-Only-Memory (ROM), updating the firmware of the device 4 can be achieved through SUANT secure code update (for reference, see US 10,346,619 B2 and G. Karame and W. Li: "Secure erasure and code update in legacy sensors", in Trust and Trustworthy Computing - 8th International Conference, TRUST 2015, Proceedings, Springer Verlag, vol. 9229, p. 283-299).

If none of the above listed options is available, the attestation service 8 may initiate a software-based attestation. If this option is not viable, the attestation service 8 may perform device radio fingerprinting (for instance, as described in K. B. Rasmussen and S. Capkun: "Implications of radio fingerprinting on the security of sensor networks", 2007 Third International Conference on Security and Privacy in Communications Networks and the Workshops - SecureComm 2007).

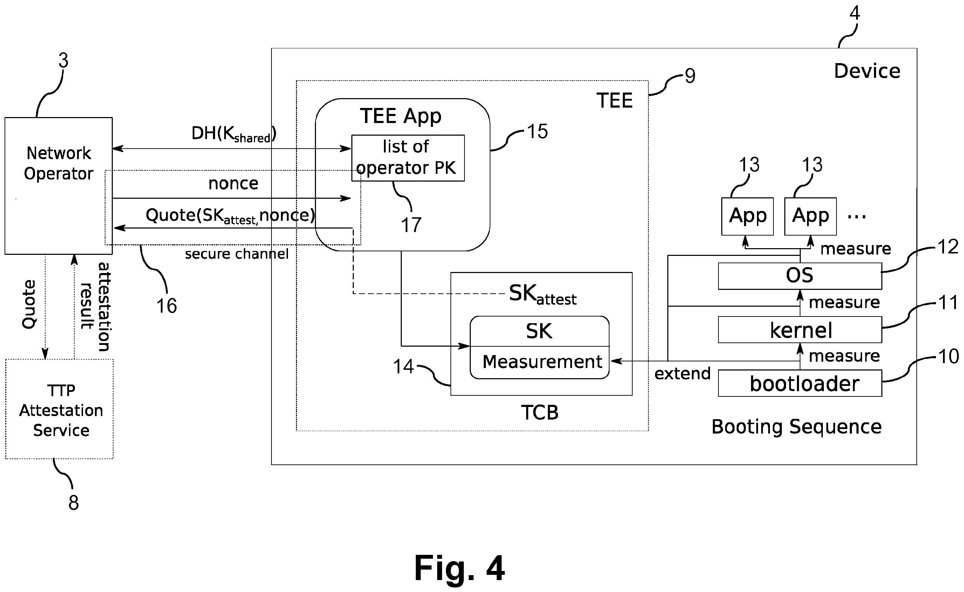

Fig. 4 depicts an example of an attestation protocol in the context of a device 4 having a TEE 9. When the device 4 boots, components are loaded in such a sequence that the respective lower level measures the integrity of the respective higher level before loading it. Specifically, as shown in Fig. 4, during the booting process the bootloader 10 measures the integrity of the kernel 11, the kernel 11 measures the integrity of the OS 12, and the OS 12 measures the integrity of the respective applications 13.

The measurement results are saved in a secure storage of the TCB 14 (Trusted Computing Base) of the device's TEE 9. As shown in Fig. 4, the storage may be performed in an Extend fashion through the TEE application 15 as follows: *Mᵢ* = *H*(*M*_{*i-*1}*, hᵢ*)*,* where *H* is the cryptographic hash function, *hᵢ* is the measurement of component *i*, and *Mᵢ* is the extended measurement with component i.

Then, during the attestation process, the network operator 3 first establishes a secure channel 16 with the TEE application 15. In this context it should be noted that the TEE application 15 has hard-coded a list 17 of public keys of network operators 3, so that the TEE application 15 is able to authenticate the network operator 3, e.g. in a Diffie-Hellman key exchange, and get a shared key *K_{shared}.* In the authentication process only integrity should be guaranteed, not necessarily confidentiality.

After the secure channel 16 is established, the network operator 3 challenges a nonce to the TEE 9, which will prepare a Quote as response. The quote includes the measurement result of the loaded components recorded during the booting sequence, the nonce, and the signature over these information. The quote is signed with the device-wise attestation key *SKₐₜₜₑₛₜ* in the TCB 14. This key is only used to sign attestation quotes by the TEE application 15. In this context it should be noted that the key *SKₐₜₜₑₛₜ* is different from the application-wise private key *SK,* which is used for device authentication or other application purpose.

The returned quote is then forwarded and verified by the attestation service 8, which can be hosted by the network operator 3 itself or, like in the example shown in Fig. 4, remotely by a trusted third party. The network operator 3 then checks the attestation result and publishes it to the distributed ledger by issuing the following message to the blockchain :

```
                  Tupdate: (id, TEE, nonceTEE, Quote, attest_result)
```

The TEE information includes the type of TEE 9 and the version of TEE 9.

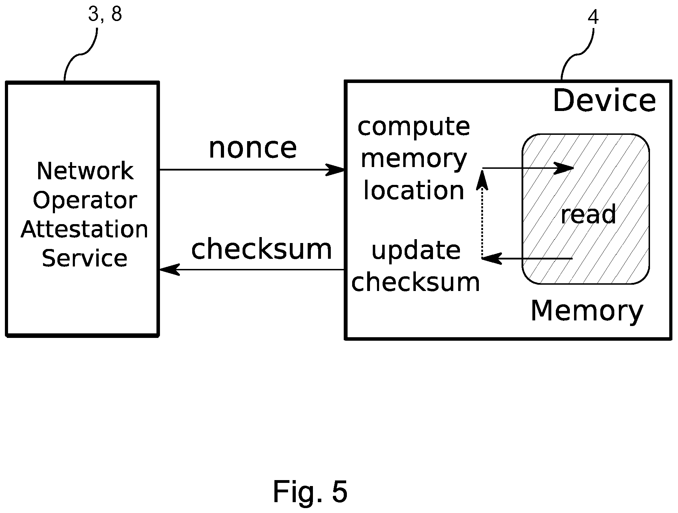

If the device 4 is not equipped with a TEE 9, the network operator 3 can perform a software attestation based on pseudorandom memory traversal, as shown in Fig. 5.

The network operator 3 (or the operator's attestation service 8) sends a nonce as challenge to the device 4. The device 4 repeatedly derives a memory location based on the nonce and reads the memory contents, which is used to update a checksum. At the end of iteration, the checksum is sent back to the network operator 3 for verification. The network operator 3 then verifies the received checksum with the presumed memory contents of the device 4. It should be noted that the function to derive the memory location is also a presumed pseudorandom function *F_{RNG}*: *m*_{*i*+1} = *F_{RNG}*(*mᵢ*)*,* where *mᵢ* is the memory location and *m*₀ = *nonce.*

The network operator 3 may also check the response time (*tₛ* for challenge start time and *tₑ* for response end time) from the device 4. If the response time takes too long, i.e. *Δt* = *tₑ* - *tₛ* exceeds a predefined threshold, the network operator 3 may be configured to suspects the integrity of the device 4. In any case, the attestation result may be updated to the blockchain as follows:

```
 Tattest: (id, "software attestation", noncesa, ts, checksum, te, attestation_result)
```

If none of the approaches described above is applicable, then the network operator 3 may perform device radio fingerprinting to verify whether a model of the device 4 matches the profile of the emitted signal of a certain device model. A fingerprint result may be updated via the following transaction:

```
                      Tfp: (id, fingerprint_profile, result)
```

Irrespective of which specific attestation procedure is actually implemented, the outcome of the attestation may be stored in the blockchain. In case of a software attestation, the current state of software can be compared against a whitelist of software that is either stored in the blockchain or in a cloud back end storage.

It may be provided that network operators 3 decide whether or not to offer connectivity to a device 4 depending on information about the respective device 4 available in the distributed ledger. This may include setting up a risk assessment service that fetches device information maintained by multiple stakeholders through the distributed ledger to decide the trustworthiness of the device. It may be provided that the network operators 3 are equipped with a risk assessment module that is configured to retrieve relevant device information from the distributed ledger, including device public keys, shipment history, attestation results, firmware version, etc., and to analyze the retrieved information according to configurable risk assessment rules. In case the device 4 successfully passes the risk assessment, the network operator 3 will offer connectivity to the device 4, otherwise the network operator 3 will not offer connectivity, e.g. by rejecting any respective request received from the device 4.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### Reference numbers

- 1: mobile communication network
- 2: hardware vendor
- 3: network operator
- 3a: cloud network service provider
- 4: network devices
- 5: distributed ledger network
- 6: node in the distributed ledger network
- 7: administrative domain
- 8: attestation service
- 9: Trusted Execution Environment (TEE)
- 10: bootloader
- 11: kernel
- 12: Operating System (OS)
- 13: application
- 14: Trusted Computing Base (TCB)
- 15: TEE application
- 16: secure channel
- 17: list of public keys of network operators
- 18: configuratrion database

## Claims

1. A method for identification and monitoring of devices (4) of a network (1), wherein the devices (4) of the network (1) are provided and/or operated by different participating entities including hardware vendors (2) producing the devices (4), supply-chain members distributing, shipping and delivering the devices (4) and network operators (3) acquiring the devices (4) from hardware vendors (2) and/or from other network operators (3) and deploying and maintaining the acquired devices (4), the method comprising:
setting up a distributed ledger network (5), wherein each of the participating entities maintains one or multiple nodes (6) in the distributed ledger network (5) used by the respective participating entity to issue and retrieve records to/from a ledger of the distributed ledger network (5),
setting up a public key infrastructure that assigns each device (4), before being deployed to the network (1), a unique certified public key, and
keeping an updated status of the devices (4) in the ledger of the distributed ledger network (5), wherein the ledger is used to integrate device (4) identity management, device (4) history management and device (4) software update management by providing for the execution of:
issuing, by the participating entities upon identifying a change of a status of a device (4), a transaction related to the status change of the device (4) to the ledger, wherein the device's (4) public key is recorded in the transaction.

2. The method according to claim 1, wherein the network (1) is a large-scale dynamic network, such as a 4G, LTE/LTE-Advanced, network or a 5G network.

3. The method according to claim 1 or 2, wherein a network operator (3), before deploying any device (4) to the network (1), verifies that the private key embedded in the respective device (4) matches the device's (4) public key.

4. The method according to any of claims 1 to 3, wherein a supply-chain member, upon delivery of a device (4) from a hardware vendor (2) or a network operator (3), issues a record to the distributed ledger indicating the public key of the device (4) and the identity of the hardware vendor (2) or the network operator (3) together with an information indicating the status of the device (4) as being shipped.

5. The method according to any of claims 1 to 4, wherein a hardware vendor (2) or a network operator (3), upon receipt of a device (4) from a supply-chain member, performs the steps of
retrieving the public key of the device (4),
querying device information from the distributed ledger, and
in case the device information from the distributed ledger matched the public key of the device (4), issuing a record to the distributed ledger updating the device status as being received.

6. A system for identification and monitoring of devices (4) of a network (1), the system comprising:
a plurality of participating entities configured to provide and/or operate the devices (4) of the network (1), the participating entities including hardware vendors (2) producing the devices (4), supply-chain members distributing, shipping and delivering the devices (4) and network operators (3) acquiring the devices (4) from hardware vendors (2) and/or from other network operators (3) and deploying and maintaining the acquired devices (4),
a public key infrastructure configured to assign to each device (4), before being deployed to the network (1), a unique certified public key,
a distributed ledger network (5), wherein each of the participating entities is configured to maintain one or multiple nodes (6) in the distributed ledger network (5) used by the respective participating entity to issue and retrieve records to/from a ledger of the distributed ledger network (5), wherein the ledger is used to integrate device (4) identity management, device (4) history management and device (4) software update management,
wherein the participating entities are configured to keep an updated status of the devices (4) in the ledger of the distributed ledger network (5) by issuing, upon identifying a change of a status of a device (4), a transaction related to the status change of the device (4) to the ledger, wherein the device's (4) public key is recorded in the transaction.

## Patentansprüche

1. Verfahren zur Identifikation und Überwachung von Geräten (4) eines Netzwerks (1), wobei die Geräte (4) des Netzwerks (1) von verschiedenen teilnehmenden Einheiten bereitgestellt und/oder betrieben werden, einschließlich Hardwareanbietern (2), die die Geräte (4) herstellen, Lieferkettenmitgliedern, die die Geräte (4) distribuieren, versenden und ausliefern, und Netzwerkbetreibern (3), die die Geräte (4) von Hardwareanbietern (2) und/oder von anderen Netzwerkbetreibern (3) erwerben und die erworbenen Geräte (4) einsetzen und warten, wobei das Verfahren umfasst:
Aufbauen eines verteilten Ledger-Netzwerks (5), wobei jede der teilnehmenden Einheiten einen oder mehrere Knoten (6) in dem verteilten Ledger-Netzwerk (5) unterhält, die von der jeweiligen teilnehmenden Einheit verwendet werden, um Datensätze an einen Ledger des verteilten Ledger-Netzwerks (5) auszugeben und/oder von diesem abzurufen,
Aufbauen einer Public-Key-Infrastruktur, die jedem Gerät (4) vor seinem Einsatz in dem Netzwerk (1) einen eindeutigen zertifizierten öffentlichen Schlüssel zuweist, und
Führen eines aktualisierten Status der Geräte (4) in dem Ledger des verteilten Ledger-Netzwerks (5), wobei der Ledger verwendet wird, um das Identitätsmanagement des Geräts (4), das Verlaufsmanagement des Geräts (4) und das Software-Update-Management des Geräts (4) durch Bereitstellung folgender Ausführung zu integrieren:
Ausstellen, durch die teilnehmenden Einheiten nach Identifizierung einer Statusänderung eines Geräts (4), einer mit der Statusänderung des Geräts (4) zusammenhängenden Transaktion an den Ledger, wobei der öffentliche Schlüssel des Geräts (4) in der Transaktion aufgezeichnet wird.

2. Verfahren nach Anspruch 1, wobei das Netzwerk (1) ein weiträumiges dynamisches Netzwerk ist, wie ein 4G-, LTE/LTE-Advanced-Netzwerk oder ein 5G-Netzwerk.

3. Verfahren nach Anspruch 1 oder 2, wobei ein Netzbetreiber (3) vor dem Einsatz eines Geräts (4) in dem Netzwerk (1) verifiziert, dass der in das jeweilige Gerät (4) eingebettete private Schlüssel mit dem öffentlichen Schlüssel des Geräts (4) übereinstimmt.

4. Verfahren nach einem der Ansprüche 1 bis 3, wobei ein Lieferkettenmitglied bei Lieferung eines Geräts (4) von einem Hardwareanbieter (2) oder einem Netzbetreiber (3) einen Datensatz an den verteilte Ledger ausgibt, der den öffentlichen Schlüssel des Geräts (4) und die Identität des Hardwareanbieters (2) oder des Netzbetreibers (3) zusammen mit einer Information angibt, die den Status des Geräts (4) als versandt anzeigt.

5. Verfahren nach einem der Ansprüche 1 bis 4, wobei ein Hardwareanbieter (2) oder ein Netzbetreiber (3) bei Erhalt eines Geräts (4) von einem Lieferkettenmitglied die folgenden Schritte ausführt:
Abrufen des öffentlichen Schlüssels des Geräts (4),
Abfragen von Geräteinformationen aus dem verteilten Ledger, und
falls die Geräteinformationen aus dem verteilten Ledger mit dem öffentlichen Schlüssel des Geräts (4) übereinstimmen, Ausgeben eines Datensatzes an den verteilten Ledger, der den Gerätestatus als empfangen aktualisiert.

6. System zur Identifikation und Überwachung von Geräten (4) eines Netzwerks (1), wobei das System Folgendes umfasst:
eine Vielzahl von teilnehmenden Einheiten, die eingerichtet sind, die Geräte (4) des Netzwerks (1) bereitzustellen und/oder zu betreiben, wobei die teilnehmenden Einheiten Hardwareanbieter (2), die die Geräte (4) herstellen, Lieferkettenmitglieder, die die Geräte (4) distribuieren, versenden und ausliefern, und Netzbetreiber (3), die die Geräte (4) von Hardwareanbietern (2) und/oder von anderen Netzbetreibern (3) erwerben und die erworbenen Geräte (4) einsetzen und warten, umfassen,
eine Public-Key-Infrastruktur, die eingerichtet ist, jedem Gerät (4) vor seinem Einsatz in dem Netzwerk (1) einen eindeutigen zertifizierten öffentlichen Schlüssel zuzuweisen,
ein verteiltes Ledger-Netzwerk (5), wobei jede der teilnehmenden Einheiten eingerichtet ist, einen oder mehrere Knoten (6) in dem verteilten Ledger-Netzwerk (5) zu unterhalten, die von der jeweiligen teilnehmenden Einheit verwendet werden, um Datensätze an einen Ledger des verteilten Ledger-Netzwerks (5) auszugeben und/oder von diesem abzurufen, wobei der Ledger verwendet wird, um das Identitätsmanagement des Geräts (4), das Verlaufsmanagement des Geräts (4) und das Software-Update-Management des Geräts (4) zu integrieren,
wobei die teilnehmenden Einheiten so konfiguriert sind, dass sie einen aktualisierten Status der Geräte (4) in dem Ledger des verteilten Ledger-Netzwerks (5) aufrechterhalten, indem sie bei einer Identifizierung einer Statusänderung eines Geräts (4) eine Transaktion in Bezug auf die Statusänderung des Geräts (4) an den Ledger ausgeben, wobei der öffentliche Schlüssel des Geräts (4) in der Transaktion aufgezeichnet wird.

## Revendications

1. Procédé d'identification et de surveillance de dispositifs (4) d'un réseau (1), dans lequel les dispositifs (4) du réseau (1) sont fournis et/ou exploités par différentes entités participantes comprenant des fabricants de matériel (2) produisant les dispositifs (4), des membres de la chaîne d'approvisionnement distribuant, expédiant et livrant les dispositifs (4) et des exploitants de réseau (3) acquérant les dispositifs (4) auprès de fabricants de matériel (2) et/ou auprès d'autres exploitants de réseaux (3) et déployant et maintenant les dispositifs (4) acquis, le procédé comprenant :
l'établissement d'un réseau de registre distribué (5), dans lequel chacune des entités participantes maintient un ou plusieurs nœuds (6) dans le réseau de registre distribué (5) utilisé par l'entité participante respective pour émettre des enregistrements à et en récupérer depuis un registre du réseau de registre distribué (5),
l'établissement d'une infrastructure de clé publique qui assigne, à chaque dispositif (4), avant son déploiement dans le réseau (1), une clé publique certifiée unique, et
la conservation d'un statut mis à jour des dispositifs (4) dans le registre du réseau de registre distribué (5), dans lequel le registre est utilisé pour intégrer une gestion d'identité de dispositif (4), une gestion d'historique de dispositif (4) et une gestion de mise à jour de logiciel de dispositif (4) en permettant l'exécution de :
l'émission, par les entités participantes lors de l'identification d'un changement d'un statut d'un dispositif (4), d'une transaction relative au changement de statut du dispositif (4) au registre, dans lequel la clé publique du dispositif (4) est enregistrée dans la transaction.

2. Procédé selon la revendication 1, dans lequel le réseau (1) est un réseau dynamique à grande échelle, comme un réseau 4G, LTE/LTE-Advanced, ou un réseau 5G.

3. Procédé selon la revendication 1 ou 2, dans lequel un exploitant de réseau (3), avant le déploiement de n'importe quel dispositif (4) dans le réseau (1), vérifie que la clé privée intégrée au dispositif (4) respectif correspond à la clé publique du dispositif (4).

4. Procédé selon l'une quelconque des revendications 1 à 3, dans lequel un membre de la chaîne d'approvisionnement, lors d'une livraison d'un dispositif (4) depuis un fabricant de matériel (2) ou un exploitant de réseau (3), émet un enregistrement au registre distribué indiquant la clé publique du dispositif (4) et l'identité du fabricant de matériel (2) ou de l'exploitant de réseau (3) avec une information indiquant le statut du dispositif (4) comme étant expédié.

5. Procédé selon l'une quelconque des revendications 1 à 4, dans lequel un fabricant de matériel (2) ou un exploitant de réseau (3), lors d'une réception d'un dispositif (4) depuis un membre de la chaîne d'approvisionnement, réalise les étapes suivantes :
la récupération de la clé publique du dispositif (4),
la demande d'informations de dispositif au registre distribué, et
dans le cas où les informations de dispositif provenant du registre distribué correspondent à la clé publique du dispositif (4), l'émission d'un enregistrement au registre distribué mettant à jour le statut de dispositif comme étant reçu.

6. Système d'identification et de surveillance de dispositifs (4) d'un réseau (1), le système comprenant :
une pluralité d'entités participantes configurées pour fournir et/ou exploiter les dispositifs (4) du réseau (1), les entités participantes comprenant des fabricants de matériel (2) produisant les dispositifs (4), des membres de la chaîne d'approvisionnement distribuant, expédiant et livrant les dispositifs (4) et des exploitants de réseau (3) acquérant les dispositifs (4) auprès de fabricants de matériel (2) et/ou auprès d'autres exploitants de réseaux (3) et déployant et maintenant les dispositifs (4) acquis,
une infrastructure de clé publique configurée pour assigner, à chaque dispositif (4), avant son déploiement dans le réseau (1), une clé publique certifiée unique,
un réseau de registre distribué (5), dans lequel chacune des entités participantes est configurée pour maintenir un ou plusieurs nœuds (6) dans le réseau de registre distribué (5) utilisés par l'entité participante respective pour émettre des enregistrements à et en récupérer depuis un registre du réseau de registre distribué (5), dans lequel le registre est utilisé pour intégrer une gestion d'identité de dispositif (4), une gestion d'historique de dispositif (4) et une gestion de mise à jour de logiciel de dispositif (4),
dans lequel les entités participantes sont configurées pour conserver un statut mis à jour des dispositifs (4) dans le registre du réseau de registre distribué (5) par l'émission, lors de l'identification d'un changement d'un statut d'un dispositif (4), d'une transaction relative au changement de statut du dispositif (4) au registre, dans lequel la clé publique du dispositif (4) est enregistrée dans la transaction.
